# EUROPÄISCHE PATENTANMELDUNG

(11) **EP 2 606 984 A1**
(43) Veröffentlichungstag der Anmeldung: **26.06.2013**
(21) Anmeldenummer: 11194940.0
(22) Anmeldetag: 21.12.2011
(51) Int. Cl.: B05C 17/005, B05C 17/01, A61C 5/06, F16H 25/20, B01F 13/00

(54) **Antriebsvorrichtung einer Dosier- und Mischvorrichtung**

(71) Anmelder: Sika Technology AG, 6340 Baar (CH)
(72) Erfinder: Schultheiss, Christian, 8330 Pfäffikon (CH)
(74) Vertreter: Sika Patent Attorneys

(57) **Zusammenfassung**

Antriebseinrichtung (1B) einer Dosier- und Mischvorrichtung (1A) für Mehrkomponentenstoffe, insbesondere Mehrkomponenten-Klebstoffe, welche mindestens zwei Kartuschenaufnahmevorrichtungen (23) zur Aufnahme von auswechselbaren Kartuschen (2.1,3.1) mit einzelnen Stoffkomponenten, eine Austriebsvorrichtung zum gleichzeitigen Austreiben der Stoffkomponenten aus den Kartuschen durch Komponentenausgänge mit Hilfe von in die Kartuschenaufnahmevorrichtung bzw. Kartuschen eintauchende Austriebskolben (11,16) und eine Mischvorrichtung (17) aufweist, welche mit den Komponentenausgängen verbunden ist, die ausgetriebenen Stoffkomponenten mischt und diese gemischt austrägt, mit einer Getriebeeinheit (8) zum Anschluss einer, insbesondere elektrischen, Antriebsmaschine (9), wobei die Getriebeeinheit Kupplungsmittel (24) zur zwangsweisen Verbindung eines Austriebs mindestens zweier Stoffkomponenten durch entsprechend synchronisierte Betätigung der entsprechenden Austriebskolben (11,16) über je eine Austriebsstange (4,5) aufweist.

## Beschreibung

### Technisches Gebiet

Die Erfindung betrifft eine Antriebseinrichtung einer Dosier- und Mischvorrichtung für Mehrkomponentenstoffe, insbesondere Mehrkomponenten-Klebstoffe, welche mindestens zwei zusammenhängende Kartuschenaufnahmevorrichtungen zur Aufnahme von auswechselbaren Kartuschen mit einzelnen Stoffkomponenten, eine Austriebsvorrichtung zum gleichzeitigen Austreiben der Stoffkomponenten aus den Kartuschen durch Komponentenausgänge mit Hilfe von in die Kartuschenaufnahmevorrichtung bzw. Kartuschen eintauchende Austriebskolben, wobei mindestens ein Austriebskolben ein Gewinde aufweist, welches durch eine Drehung einen Vorwärtstrieb dieses Austriebskolbens erzeugen kann, und eine Mischvorrichtung aufweist, welche mit den Komponentenausgängen verbunden ist, die ausgetriebenen Stoffkomponenten mischt und diese gemischt austrägt.

### Stand der Technik

Eine Dosier- und Mischvorrichtung mit dem vorstehend genannten Aufbau ist Gegenstand der unveröffentlichten Europäischen Patentanmeldung Ihrer 2010-0052 der Anmelderin.

Vorbekannt ist aus der DE 3233366 A1 eine ähnliche Dosier- und Mischvorrichtung zum Mischen einer Dental-Abdruckmasse. Diese Vorrichtung umfasst ein als Wegwerfteil ausgebildetes Rührwerk mit einem Basiskörper, welcher eine Mischkammer, mehrere voneinander gesondert in die Mischkammer mündende Zuführkanäle für die Komponenten der Abdruckmasse sowie Auslassöffnung für die gemischte Abdruckmasse aufweist. Das Rührwerk umfasst weiterhin einen in der Mischkammer drehbar angeordneten Rührer, der von einer Antriebsvorrichtung, an der das Rührwerk abnehmbar gehalten ist, angetrieben wird. Die Komponenten der Abdruckmasse sind in Vorratszylindern enthalten und werden durch Kolben in die Mischkammer eingeschoben und nach Mischung über die Auslassöffnung in den Abdrucklöffel hinein ausgeschoben. Mittels einer Steuerung kann die Vorschubgeschwindigkeit von Stellantrieben der Kolben variiert werden, so dass sowohl das die Abbindezeit der Abdruckmasse bestimmende Verhältnis der Kolbenvorschubgeschwindigkeit als auch den Gesamtvorschub beziehungsweise die Vorschubdauer und damit die Abdruckmassenmenge gesteuert werden kann.

### Darstellung der Erfindung

Es ist Aufgabe der Erfindung, eine zuverlässige und präzise arbeitende Antriebseinrichtung für eine Dosier- und Mischvorrichtung der oben genannten Art bereitzustellen.

Diese Aufgabe wird durch eine Antriebseinrichtung mit den Merkmalen des Anspruchs 1 gelöst. Zweckmäßige Fortbildungen des Erfindungsgedankens sind Gegenstand der abhängigen Ansprüche.

Die Erfindung schließt die Überlegung ein, beim Antrieb einer Dosier- und Mischvorrichtung für Mehrkomponentenstoffe sicherzustellen, dass eine bestimmte Komponente nur dann ausgetrieben wird, wenn zugleich auch eine andere Komponente, die mit der ersteren reagieren soll, bereitgestellt wird. Dies soll nach Überlegungen der Erfinder speziell auch dann gewährleistet sein, wenn die Komponenten in Kartuschen mit unterschiedlichem Aufbau und unterschiedlicher Größe aufgenommen sind und/oder unterschiedliche mechanische Eigenschaften haben. Dem gemäß schließt die Erfindung den Gedanken des Vorsehens einer Getriebeeinheit zum Anschluss einer Antriebsmaschine ein, welche Kupplungsmittel zur zwangsweisen Verbindung eines Austriebs mindestens zweier Stoffkomponenten durch entsprechend synchronisierte Betätigung der entsprechenden Austriebskolben über je eine Austriebsstange aufweist.

In einer Ausführung der Erfindung ist die Getriebeeinheit zum Axial-Antrieb eines über eine erste Austriebsstange angetriebenen ersten Austriebskolbens zum Austreiben einer Stoffkomponente A und zum Dreh-Antrieb eines mit einem Gewinde versehenen und über eine zweite spindelartige Austriebsstange angetriebenen zweiten Austriebskolbens zum Austreiben einer Stoffkomponente B ausgebildet, und sie hat eine unter Reaktionsdruck beim Austreiben der Stoffkomponente A axial verschiebliche Getriebebaugruppe. Bei dieser Ausführung ist des Weiteren eine schaltbare Kupplungseinrichtung vorgesehen, welche die zweite Austriebsstange mit der Antriebsmaschine verbindet, wenn sich die verschiebliche Baugruppe unter dem Reaktionsdruck um einen vorbestimmten Betrag verschoben hat. Die Kupplungseinrichtung ist mithin selbsttätig schaltend, und zwar bei Erreichen eines bestimmten Reaktionsdruck-Wertes beim Austreiben der Stoffkomponente A.

In einer Ausgestaltung ist zur Realisierung dieser selbsttätigen Schaltfunktion der verschieblichen Baugruppe (oder auch dem ihr zugeordneten Kupplungselement) ein Gegendruckfederelement zugeordnet, welches eine dem Reaktionsdruck beim Austragen der Komponente A entgegen gerichteter Gegendruckkraft zur Festlegung des Wirkpunktes der Kupplungseinrichtung bereitstellt. In einer weiteren Ausgestaltung ist der Baugruppe oder dem Kupplungselement ein Andruckfederelement zur Bereitstellung einer zum Gegendruck beim Austragen der Komponente A parallel gerichteten Justierungs-Druckkraft zur Feineinstellung des Wirkpunktes der Kupplungseinrichtung zugeordnet.

In einer weiteren Ausführung der Erfindung weist die schaltbare Kupplungseinrichtung ein erstes Kupplungselement auf, welches in axialer Richtung im Wesentlichen fest bezüglich der Antriebsmaschine- bzw. des Gerätegehäuses positioniert ist. Die Ausführung und Positionierung eines zweiten Kupplungselements ist so festgelegt, dass es sich bei einem festgelegten Druckwert unter dem von der Kartusche der Stoffkomponente A ausgehenden und über den ersten Antriebskolben und die erste Austriebsstange übertragenen Druck mit der verschieblichen Getriebebaugruppe verschiebt. Dieses Kupplungselement kommt bei Verschiebung der erwähnten Baugruppe mit dem ersten Kupplungselement in Eingriff.

In einer weiteren zweckmäßigen Ausführung der Erfindung ist die schaltbare Kupplungseinrichtung als formschlüssige Kupplung, insbesondere Klauenkupplung, ausgebildet. Des Weiteren ist bevorzugt vorgesehen, dass die Kupplungselemente der formschlüssigen Kupplung als selbstfindende Elemente ausgebildet sind. Alternativ kann die schaltbare Kupplung als kraftschlüssige Kupplung, insbesondere Reibkupplung, ausgebildet sein.

In einer weiteren Ausführung ist die dem Austriebskolben für die Komponente A zugeordnete erste Austriebsstange in einfacher und kostengünstiger Weise als herkömmliche Zahnstange ausgeführt, und die zugehörigen Teile der Getriebeeinheit sind in Anpassung hieran ausgebildet. Insbesondere ist im Getriebe mindestens ein Abtriebsrad - bevorzugt zwei Abtriebsräder - zum Eingriff mit der Zahnstange vorgesehen, die weiter bevorzugt als Schneckenrad bzw. Schneckenräder ausgeführt sein können. Grundsätzlich ist aber auch eine Ausführung der ersten Austriebsstange als Spindel möglich, der etwa ein Kugelspindeltrieb mit trennbarer Gewindehülse oder ein Kugelspindeltrieb mit Gewindeumlaufspindel zugeordnet sein können.

In einer weiteren Ausführung sind die im Normalbetrieb mit der ersten Austriebsstange im Eingriff stehenden Abtriebsräder der Getriebeeinheit gegenüber der Austriebsstange verschiebbar, um sie von der Austriebsstange zu entkoppeln und hierdurch deren praktisch widerstandsfreies manuelles Zurückziehen für eine Neubeladung der Misch- und Dosiervorrichtung zu gewährleisten.

In einer weiteren Ausführung ist der Antrieb des zweiten Austriebskolbens zum Austreiben der Stoffkomponente B mit neuartigen Mitteln realisiert. Speziell weist die zugehörige Austriebsstange in einem, bezogen auf die Gebrauchslage, hinteren Teil ihrer Längserstreckung einen spiralverzahnten nicht selbsthemmenden Spindelabschnitt und am vorderen Ende ein Eingriffselement zum Eingreifen in den zweiten Austriebskolben auf, und der zugehörige Abschnitt der Getriebeeinheit umfasst ein Abtriebsrad mit Innen-Spiralverzahnung, welche an die Spiralverzahnung des Spindelabschnitts angepasst ist.

In einer weiteren Ausführung ist vorgesehen, dass die Getriebeeinheit einen Drehwellen-Anschlussabschnitt zum Anschluss einer Antriebswelle eines in der Dosier- und Mischvorrichtung vorgesehenen aktiven Mischers umfasst.

### Kurze Beschreibung der Zeichnungen

Im Folgenden wird die Erfindung anhand der bevorzugten Ausführungsbeispiele mit Hilfe der Figuren näher beschrieben, wobei nur die zum Verständnis der Erfindung notwendigen Merkmale dargestellt sind. Selbstverständlich ist die Erfindung nicht auf gezeigte und beschriebene Ausführungsbeispiele beschränkt.

Es zeigen im Einzelnen:
- Fig. 1: eine Seitenansicht eines erfindungsgemäßen Applikationsgerätes für einen 2-Komponentenkleber;
- Fig. 2: eine Darstellung des Aufbaus der Getriebeeinheit 8 des Applikationsgerätes nach Fig. 1,
- Fig. 3A und 3B: perspektivische Darstellungen einer Ausführungsform von dem Antrieb der Zahnstange 4 dienenden Getriebekomponente,
- Fig. 4: eine Prinzipskizze (in Art einer perspektivischen Darstellung) zur Erläuterung einer weiteren Variante des Antriebs der Zahnstange 4,
- Fig. 5: eine perspektivische Darstellung einer Ausführungsform der zweiten Austriebsstange 5 des Applikationsgerätes nach Fig. 1,
- Fig. 6: eine Schnittansicht einer Ausführungsform der Getriebeeinheit 8 des Applikationsgerätes nach Fig. 1,
- Fig. 7A und 7B: Prinzipskizzen (in Art perspektivischer Darstellungen) eines Details der zweiten Austriebsstange nach Fig. 5,
- Fig. 8: ein Blockschaltbild einer Ausführungsform der zur Antriebseinrichtung 1B des Applikationsgerätes nach Fig. 1 gehörenden Sensorik und
- Fig. 9A und 9B: Motorstrom-Zeit-Diagramme zu Erläuterung zweier Ausführungsformen eines Steuerungsablaufs der Antriebssteuerung.

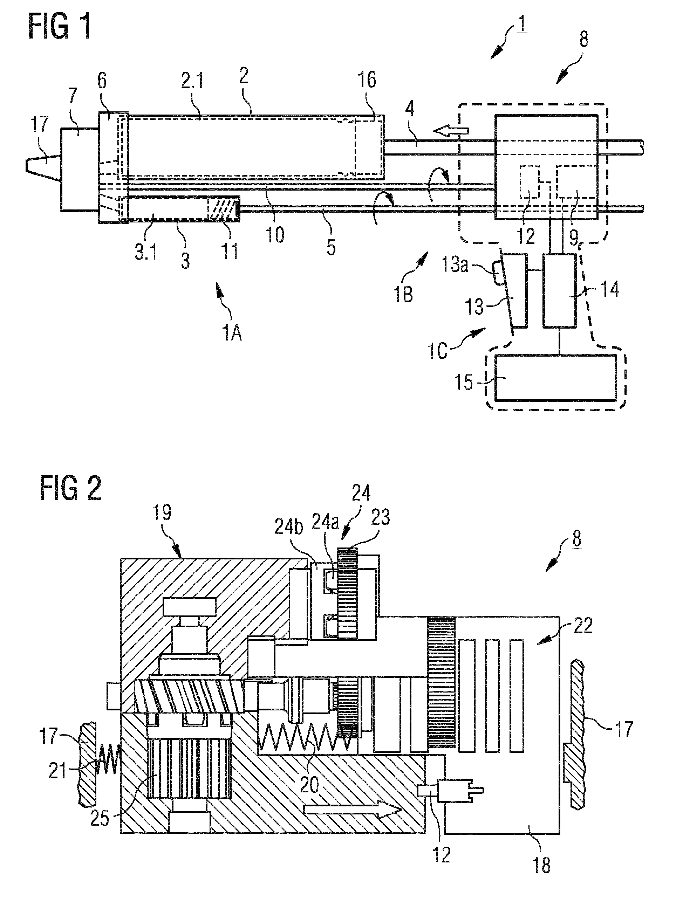

Fig. 1 zeigt eine Seitenansicht (in schematisierter Darstellung) eines erfindungsgemäßen Applikationsgerätes 1, wobei als wesentliche Komponenten eine Dosier- und Mischvorrichtung 1A und eine zugehörige Antriebseinrichtung 1B und schließlich ein Gerätekörper 1C gesondert bezeichnet sind.

Die Dosier- und Mischvorrichtung 1A umfasst beispielhaft dargestellt zwei Kartuschenaufnahmevorrichtungen 2 und 3 unterschiedlichen Durchmessers und unterschiedlicher Länge für einen Schlauchbeutel 2.1 und eine feste Kartusche 3.1 Die größere Kartuschenaufnahmevorrichtung 2 wird mit Hilfe eines axial verschieblichen ersten Antriebskolbens ("Linearkolbens") 16 betätigt, der mit einer ersten Antriebsstange (Zahnstange) 4 verbunden ist und durch diese linear in die Kartuschenaufnahmevorrichtung 2 vorgetrieben wird. Die Kartuschenaufnahmevorrichtung 3, die einen wesentlich kleineren Durchmesser aufweist und außerdem wesentlich kürzer als die Kartuschenaufnahmevorrichtung 2 ist, wird erfindungsgemäß durch einen zweiten Antriebskolben ("Drehkolben") betätigt, welcher auf der Außenseite ein Gewinde aufweist, das sich in die Innenwandung der Kartuschenaufnahmevorrichtung 3 oder einer dort eingesetzten Kartusche 3.1 einprägt und durch seine Rotation einen Vortrieb erzeugt.

Die Antriebseinheit 1B umfasst eine Getriebeeinheit 8, welche bei einer einzigen Antriebseingangsseite drei unterschiedliche Antriebsausgangsseiten aufweist. Dies sind einerseits ein Ausgang für die linear vorgeschobene Zahnstange 4, andererseits ein Ausgang für eine zweite Antriebsstange 5 und schließlich ein Ausgang für eine ebenfalls rotierende Antriebswelle 10, welche einen Rotationsmischer 7 betreibt. Die beiden Kartuschenaufnahmevorrichtungen 2 und 3 sind ausgangsseitig mit einer Kartuschenkupplung 6 verbunden, durch die auch das in den Kartuschenaufnahmevorrichtungen 2 und 3 befindliche Material von den Komponentenausgängen zum Rotationsmischer 7, der ebenfalls mit der Kartuschenkupplung 6 verbunden ist, befördert wird. Die Bauweise eines solchen Rotationsmischers ist bekannt. Er verfügt über eine vorne angebrachte Austriebsspitze 17, durch welche das gemischte Material letztendlich ausgetragen wird.

Die Getriebeeinheit 8 wird in der hier gezeigten Ausführungsform der Dosier- und Mischvorrichtung 1 mit Hilfe eines Elektromotors 9 angetrieben. In ihr ist im übrigen ein Mikroschalter 12 vorgesehen, dessen Funktion weiter unten beschrieben wird. Der Gerätekorpus 1C umfasst im wesentlichen eine Bedieneinheit 13 mit einem manuell zu betätigenden Ein-/Ausschalter 13a, eine Betriebssteuereinheit 14 und einen Akkupack 15.

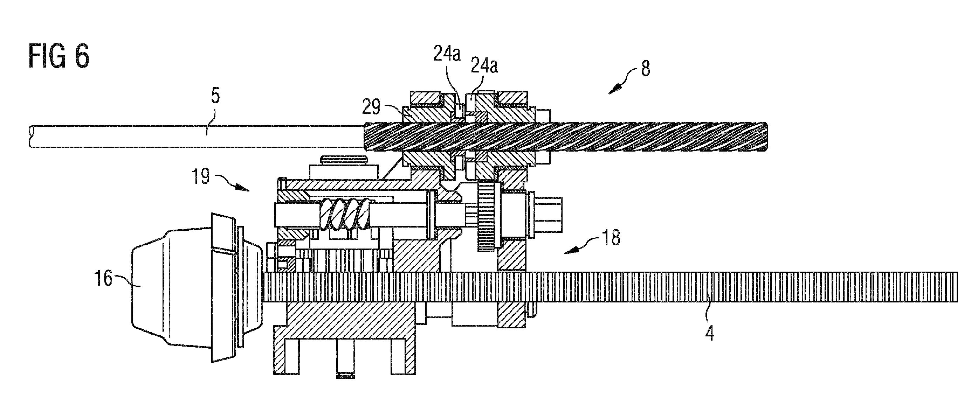

Fig. 2 zeigt den Aufbau einer Ausführungsform der Getriebeeinheit 8 etwas genauer; es wird hierzu auch auf Fig. 6 und die Ausführungen weiter unten hingewiesen. Es ist zu beachten, dass die Darstellungsweise von Fig. 2 und weiteren Figuren insofern von derjenigen in Fig. 1 abweicht, als in Fig. 2 die zur Zahnstange 4 gehörenden Getriebekomponenten unten und die zur zweiten Austriebsstange 5 gehörenden Komponenten oben liegen.

Die Getriebeeinheit 8 umfasst eine erste, bezüglich einer Gehäusewandung 17 des Applikationsgerätes ortsfeste Baugruppe 18 und eine zweite, im Gerätegehäuse verschieblich gelagerte Baugruppe 19. Beide Getriebebaugruppen 18 und 19 sind durch eine (hier symbolisch dargestellte) Gegendruckfeder 20 elastisch gegeneinander verspannt, und die verschiebliche Baugruppe 19 ist gegenüber dem Gerätegehäuse 17 mit einem weiteren Federelement 21 elastisch abgestützt, welches im weiteren auch als Andruckfederelement bezeichnet wird. Die erste Baugruppe 18 umfasst ein Planetengetriebe 22, welches mit einem (nicht dargestellten) Antriebsritzel des Antriebsmotors im Eingriff steht, sowie den Abtrieb 23 zum Antrieb der spindelartigen zweiten Antriebsstange (hier ebenfalls nicht dargestellt) und Abtriebsräder für die erste Austriebstange (Zahnstange) und die Antriebswelle des Mischers, die hier ebenfalls nicht gesondert bezeichnet bzw. dargestellt sind.

Am Abtrieb für die zweite Austriebsstange ist eine schaltbare Kupplung (Klauenkupplung) 24 vorgesehen, die ein bezüglich der ersten Baugruppe 28 ortsfestes erstes Kupplungselement 24a und ein bezüglich der zweiten Baugruppe 19 ortsfestes zweites Kupplungselement 24b umfasst. Eine in der zweiten Baugruppe 19 untergebrachte Getriebekomponente 25 zum Antrieb der ersten Austriebstange (Zahnstange) wird weiter unten beschrieben.

An der ersten Baugruppe 18 ist der Mikroschalter 12 fest angebracht, der konstruktiv so ausgestaltet und positioniert ist, dass er in einer vorbestimmten Verschiebungsposition der zweiten Baugruppe 19 betätigt wird.

Die Funktion der zweiteiligen Ausführung der Getriebeeinheit 8 mit den erwähnten Federabstützungen und dem Mikroschalter ist, vereinfacht erläutert, wie folgt:
Im ausgeschalteten Zustand des Applikationsgerätes ist die zweite Baugruppe 19 gegenüber der ersten Baugruppe 18 der Getriebeeinheit 8 durch die Kraft der Gegendruckfeder 20 so weit verschoben, dass das erste und zweite Kupplungselement 24a, 24b der schaltbaren Kupplung 24 außer Eingriff sind und die zweite Baugruppe auch den Mikroschalter 12 nicht berührt. Die genaue Ruheposition der zweiten Baugruppe 19 wird durch geeignete Auswahl der Gegendruckfeder 20 und Andruckfeder 21 in Abstimmung aufeinander eingestellt, ebenso wie das Ansprechverhalten der Lagerung der zweiten Baugruppe bei Inbetriebnahme des Gerätes.

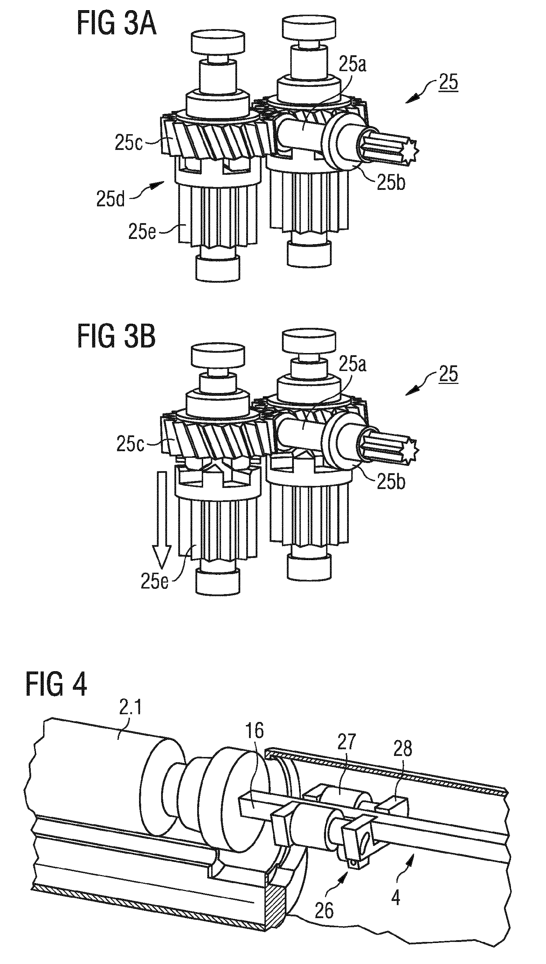

Bei Inbetriebnahme gelangt die Antriebskraft vom Antriebsmotor über das Planetengetriebe 22 und die Getriebekomponente 25 auf die Zahnstange 4 und bewirkt deren Verschiebung in Austreibrichtung der Dosier- und Mischvorrichtung (in Fig. 1 und Fig. 2 nach links). Sobald der erste Austriebskolben 16 auf das ihm zugewandte Ende der gefüllten Kartusche 2.1 trifft, baut sich aufgrund der Viskosität der darin enthaltenen Materialkomponente Reaktionsdruck auf, welcher über die Zahnstange 4 auf deren Antriebsritzel (vgl. Fig. 3A) gelangt und über deren Lager auf die zweite Baugruppe 19 übertragen wird. Sie bewirkt eine Verschiebung der zweiten Baugruppe 19 gegenüber der ersten Baugruppe 18, entgegen der Federkraft der Gegendruckfeder 20. Sobald ein bestimmter Verschiebungsbetrag erreicht ist, kommen die Kupplungselemente 24a, 24b in Eingriff, und der Kraftfluss vom Antriebsmotor gelangt nun auch zur spindelartigen zweiten Austriebsstange 5, wodurch diese in Drehung versetzt wird und den selbstschneidenden Kolben antreibt. Zugleich wird durch die Verschiebung der zweiten Baugruppe 19 der Mikroschalter 12 betätigt; zu der mit diesem Vorgang verbundenen Funktion siehe weiter unten.

Durch diese Konstruktion und den hierdurch bewirkten Ablauf wird sichergestellt, dass ein Austreiben der in der Kartusche 3.1 enthaltenen Komponente B nur dann erfolgt, wenn auch die in der Kartusche 2.1 enthaltene Komponente A eines Mehrkomponentensystems ausgetrieben wird. Dies gilt auch dann, wenn eine bereits teilweise geleerte Kartusche zu Punkt 1 mit der Komponente A in das Gerät eingesetzt und der Betrieb in der voll zurückgezogenen Ausgangsposition der Zahnstange 4 gestartet wird. Diese läuft dann nämlich solange im Leerlauf nach vorn, und die zweite Getriebebaugruppe 19 bleibt in dem gegenüber der ersten Baugruppe 18 verschobenen Ausgangszustand, bis der erste Austriebskolben 16 auf das Ende der nur teilweise gefüllten Kartusche trifft. Erst zu diesem Zeitpunkt wird dort eine Reaktionskraft aufgebaut, die die zweite Baugruppe 19 an die erste Baugruppe 18 andrückt, hiermit die schaltbare Kupplung 24 schließt, wodurch die Antriebskraft auch in die zweite Austriebsstange (Spindel) 5 eingeleitet wird. Auch in diesem Anwendungsfall wird also Komponente B erst zum richtigen Zeitpunkt ausgetrieben.

Fig. 3A und 3B zeigen als Ausführungsform von dem Antrieb der ersten Austriebsstange (Zahnstange) 4 dienenden Getriebekomponenten einen koppelbaren Schneckentrieb 25 im eingekuppelten (Fig. 3A) bzw. ausgekuppelten Zustand (Fig. 3B). Der Schneckentrieb umfasst eine Schnecke 25a mit Zahnwelle, die in einem Axiallager 25b gelagert ist und über ein (hier nicht dargestellt) Abtriebsrad des Planetengetriebes angetrieben wird. Mit der Schnecke 25a stehen zwei Schneckenräder 25c mit Spiralverzahnung im Eingriff, denen jeweils eine Klauenkupplung 25d zugeordnet ist. Mit dem ausrückbaren Kupplungselement dieser Kupplung 25d ist jeweils eine geradverzahntes Antriebsritzel 25e fest verbunden, welches im eingerückten Zustand der Kupplung 25d mit dem Schneckenrad 25c mitläuft und die Antriebskraft auf die mit ihm im Eingriff stehende, hier nicht dargestellte Zahnstange (Ziffer 4 in Fig. 1) überträgt. In dem in Fig. 3B ausgekuppelten Zustand drehen die Ritzel 25e hingegen im wesentlichen frei, so dass die zwischen ihnen gelagerte und mit ihnen im Eingriff stehende Zahnstange praktisch widerstandsfrei axial verschoben werden kann. Dies ermöglicht ein leichtes Zurückziehen zur Neubeladung des Applikationsgerätes mit einer gefüllten Kartusche 2.1 (Fig. 1).

Fig. 4 zeigt eine alternative Realisierung hierfür, und zwar unter Aufgreifen der Bezeichnungsweise in Fig. 1. Hier wird die Zahnstange 4 über ein Stirnradgetriebe 26 und zwei Schnecken 27 angetrieben, welche in einer Kulissenführung 28 schwenkbar gelagert sind. Durch Verschwenken der Schnecken 27 mittels eines nicht dargestellten Betätigungshebels ist ihr Eingriff mit der Zahnstange 4 aufhebbar, wodurch es wiederum ermöglicht wird, die Zahnstange nahezu widerstandsfrei zurückzuziehen. In weiterer Abwandlung des Aufbaus dieses Getriebeteils kann auch vorgesehen sein, dass die Zahnstange 4 über zwei direkt in ihrer Flanken eingreifende Ritzel angetrieben wird, deren Rotationsachsen senkrecht zur Längserstreckung der Zahnstange stehen. Dieses Antriebskonzept ist dem Fachmann vertraut und wird daher hier nicht genauer dargestellt oder beschrieben.

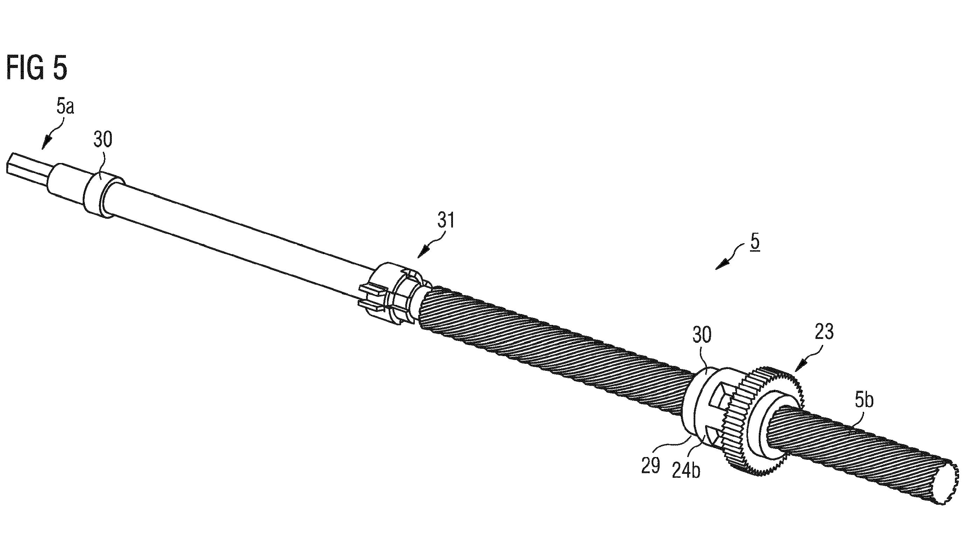

Fig. 5 zeigt in perspektivischer Darstellung als Ausführungsbeispiel die zweite Austriebsstange 5. Diese hat an ihrem einen Ende (in der Figur links) ein Eingriffselement 5a, welches hier als Mehrkant ausgebildet ist, zum Eingriff in eine korrespondierende geformte Eingriffseinrichtung am Austriebskolben 11 (Fig. 1), der gegenüber der Austriebsstange ein separates Teil darstellt und beispielsweise zur Kartusche 3.1 gehören und mit dieser geliefert werden kann. Der gegenüberliegende Endabschnitt 5b der Austriebsstange 5 weist eine Spiralverzahnung mit großer Steigung auf, welche ein nicht selbsthemmendes Verhalten erbringt. In diesem Endabschnitt 5b steht die spindelartige Austriebsstange mit einem korrespondierend zum Außengewinde des Abschnitts 5b innenverzahnten Antriebsrad 29 der Getriebeeinrichtung im Eingriff, welches mit dem weiter oben beschriebenen zweiten Kupplungselement 24b der in Fig. 2 gezeigten schaltbaren Kupplung 24 fest verbunden oder einstückig geformt ist.

Die Austriebsstange bzw. Spindel 5 ist an Lagerstellen 30 gelagert. Zwischen dem mit dem Eingriffselement 5a versehenen Ende und dem spiralverzahnten Endabschnitt 5b ist sie als zylindrische Achse gestaltet und trägt in diesem Bereich eine mitlaufende Bremseinrichtung 31 zur Erzeugung eines minimalen Bremsmoments (im Bereich 0,5 bis 1,0Nm), welches einen axialen Vorschub auch im Leerlauf, d.h. also im eingriffslosen Zustand der Austriebsstange mit dem zugehörigen Austriebkolben, erzeugt. Das Bremselement 31 kann im übrigen als Positionsmarker zur Kennzeichnung der axialen Position der Austriebsstange im Blickfeld eines Bedieners oder gegenüber einer optischen Erfassungseinrichtung dienen oder ein solches Markierungselement tragen. Damit lässt sich erfassen ob die zweite Austriebsstange sich (ebenso wie die erste Austriebsstange) vorwärts bewegt, also ein korrektes Austreiben der Komponente B erfolgt. Ein Versagen (etwa bedingt dadurch, dass kein korrekter Eingriff zwischen der Austriebsstange und dem separaten Austriebskolben besteht) kann hierdurch ohne weiteres erkannt und das Auftreten schadhafter Klebestellen unterbunden werden.

Fig. 6 zeigt in einer Schnittansicht nochmals wesentliche Teile der Getriebeeinheit 8 mit den eingesetzten Austriebsstangen 4 und 5, um deren Positionszuordnung zu verdeutlichen. Hinsichtlich des Schneckentriebs 25' zum Antrieb der ersten Austriebsstange 4 ist die Konstruktion gegenüber der in Fig. 2 sowie Fig. 3A und 3B skizzierten Getriebekomponente 25 etwas modifiziert; dies ist aber für das Verständnis dieses Aspekts der Konstruktion der Antriebseinrichtung unwesentlich.

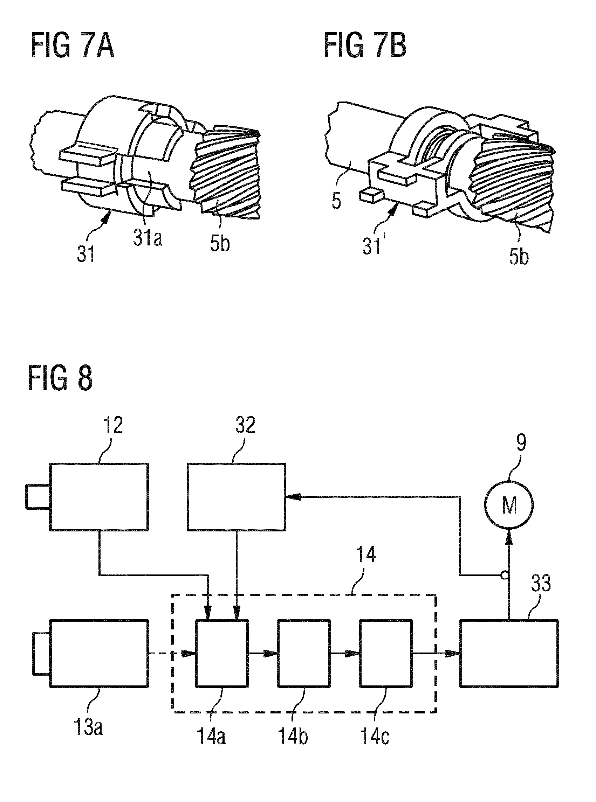

Fig. 7A und 7B zeigen zum einen das bereits in Fig. 5 dargestellte Bremselement 31, welches hier als mitlaufendes Schlingfedergehäuse ausgeführt ist, etwas genauer, und auch die Schlingfeder 31a ist zu sehen. Fig. 7B zeigt eine Ausführung des Bremselements als mitlaufende Kunststoffbremse 31'. Beide Bremselement-Konstruktionen sind dem Fachmann an sich bekannt und werden daher hier nicht weiter erläutert.

Fig. 8 zeigt an einem Blockschaltbild schematisch den Aufbau einer Sensorik und mit dieser verbundenen Steuerungstechnik der vorgeschlagenen Antriebseinrichtung. Die Sensorik umfasst neben dem bereits erwähnten Mikroschalter 12 den natürlich primär als Bedienelement dienenden Ein-/Ausschalter ("Trigger") 13a bzw. - zusätzlich zu letzterem oder in sensorischer Ersetzung desselben - eine Stromerfassungseinheit 32 zur Erfassung des Motorstromes des Antriebsmotors 9, der diesem über eine Motoransteuerung 33 bereitgestellt wird. Die Antriebssteuereinheit 14 umfasst ein Sensorsignal-Verarbeitungsstufe 14a, ein Verzögerungsglied 14b und eine Steuersignal-Ausgangsstufe 14c.

Über einen in der Sensorsignal-Verarbeitungseinheit 14a implementierten Verarbeitungsalgorithmus werden die Signale vom Mikroschalter 12, die letztlich eine Information über das Austreiben der Komponente A beinhalten, in geeignete Beziehung gesetzt zu Daten, die vom Ein-/Ausschalter 13a oder der Stromerfassungseinheit 32 kommen und letztlich eine Information zum Betriebszustand des Motors beinhalten. Das Verarbeitungsergebnis wird im Verzögerungsglied 14b noch einer geeigneten zeitlichen Bewertung (ebenfalls aufgrund gespeicherter Algorithmen) unterzogen, und im Ergebnis wird durch die Steuersignal-Ausgabeeinheit 14c in allen Betriebsituationen des Applikationsgerätes ein geeignetes Motoransteuersignal ausgegeben.

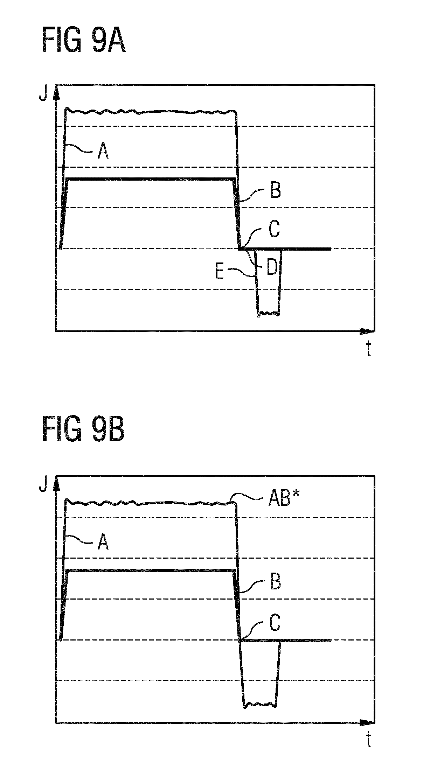

Fig. 9A und 9B zeigen beispielhafte Zeitabläufe anhand von Motorstrom-Zeit-Diagrammen, die jeweils an einem Punkt A mit dem Ansteigen des erfassten Motorstromes I aufgrund einer Einschaltbetätigung des Ein-/Ausschalters 13a beginnen. Am Punkt B in Fig. 9A wird der Ein-/Ausschalter langsam losgelassen; am Punkt C erfasst die Stromerfassungseinheit 32 einen Motorstrom-Wert von 0, danach während einer kurzen Phase D prüft die Sensor-Signalverarbeitungseinheit 14a, ob der Motorstrom beim Wert 0 bleibt, um festzustellen, ob der Ein-/Ausschalter bewusst oder versehentlich losgelassen wurde. Ist ersteres der Fall, kann danach, am Punkt E, ein Signal vom noch gedrückten Mikroschalter 12 derart verarbeitet werden, dass die Steuersignal-Ausgabeeinheit 14c letztlich ein den Rücklauf des Motors 9 bewirkendes Signal ausgibt.

Fig. 9B zeigt eine alternative Realisierung eines vergleichbaren Steuerungs-Ablaufes. Hierbei wird in der Sensorsignal-Verarbeitungseinheit 14a vor dem Zeitpunkt B (Loslassen des Ein-/Ausschalters) in einer Phase AB* der Motorstromwert erfasst und gespeichert und für einen Vergleich mit dem zum Zeitpunkt C gemessenen Stromwert herangezogen. Hier erkennt die Verarbeitungseinheit am Vergleichsergebnis, wenn der Ein-/Ausschalter bewusst losgelassen wurde, und startet, sofern vom Mikroschalter 12 ein entsprechendes Signal vorliegt, den Motorrücklauf zum praktisch gleichen Zeitpunkt.

Mit dem in beiden Varianten beschriebenen Vorgehen soll ein unnötiger MotorRücklauf bei versehentlichem oder nur sehr kurzzeitigem Loslassen des Triggers verhindert, zugleich aber ein aufgrund einer bewussten Beendigung des Austreibvorganges sinnvoll werdender Rücklauf eingeleitet werden, mit dem ein "überschießendes" Austreiben von Mehrkomponentenstoffen, insbesondere der Komponente A (die ja bei einfachem Ausschalten des Motors noch unter Austreibdruck stünde), unterbunden werden. Zugleich wird mit dem (geringfügigen) Rücklauf und mit der Beendigung der Wirkung der von der Komponente A ausgehenden Reaktionskraft erreicht, dass die zweite Getriebebaugruppe 19 in ihrer von der ersten Baugruppe 18 maximal beabstandete Ausgangsstellung zurückwandert, hiermit die Kupplung 24 gelöst wird und der Mikroschalter 12 freigegeben wird. Dies ist ein geeigneter Ausschalt- und Nichtgebrauchszustand des Applikationsgerätes.

Die Ausführung der Erfindung ist nicht auf diese Beispiele beschränkt, sondern ebenso in einer Vielzahl von Abwandlungen möglich, die im Rahmen fachgemäßen Handelns liegen.

## Patentansprüche

1. Antriebseinrichtung (18) einer Dosier- und Mischvorrichtung (1A) für Mehrkomponentenstoffe, insbesondere Mehrkomponenten-Klebstoffe, welche mindestens zwei Kartuschenaufnahmevorrichtungen (23) zur Aufnahme von auswechselbaren Kartuschen (2.1, 3.1) mit einzelnen Stoffkomponenten, eine Austriebsvorrichtung zum gleichzeitigen Austreiben der Stoffkomponenten aus den Kartuschen durch Komponentenausgänge mit Hilfe von in die Kartuschenaufnahmevorrichtung bzw. Kartuschen eintauchende Austriebskolben (11, 16) und eine Mischvorrichtung (17) aufweist, welche mit den Komponentenausgängen verbunden ist, die ausgetriebenen Stoffkomponenten mischt und diese gemischt austrägt, mit einer Getriebeeinheit (8) Anschluss einer, insbesondere elektrischen, Antriebsmaschine (9), wobei die Getriebeeinheit Kupplungsmittel (24) zur zwangsweisen Verbindung eines Austriebs mindestens zweier Stoffkomponenten durch entsprechend synchronisierte Betätigung der entsprechenden Austriebskolben (11, 16) über je eine Austriebsstange (4, 5) aufweist.

2. Antriebseinrichtung nach Anspruch 1, wobei die Getriebeeinheit (8) zum Axial-Antrieb eines über eine erste Austriebsstange (4) angetriebenen ersten Austriebskolbens (16) zum Austreiben einer Stoffkomponente A und zum Dreh-Antrieb eines mit einem Gewinde versehenen und über eine zweite, spindelartige Austriebsstange (5) angetriebenen zweiten Austriebskolbens(16) zum Austreiben einer Stoffkomponente B ausgebildet ist und eine unter Reaktionsdruck beim Austreiben der Stoffkomponente A axial verschiebliche Baugruppe hat und eine schaltbare Kupplungseinrichtung (24) vorgesehen ist, welche die zweite Austriebsstange mit der Antriebsmaschine (9) verbindet, wenn sich die verschiebliche Baugruppe unter dem Reaktionsdruck um einen vorbestimmten Betrag verschoben hat.

3. Antriebseinrichtung nach Anspruch 2, wobei die schaltbare Kupplungseinrichtung (24) ein erstes Kupplungselement (24a), welches in axialer Richtung im Wesentlichen fest bezüglich der Antriebsmaschine (9) ist und ein zweites Kupplungselement (24b) aufweist, welches in axialer Richtung im Wesentlichen fest bezüglich der verschieblichen Baugruppe (19) positioniert ist, derart, dass es sich unter dem Reaktionsdruck mit der Baugruppe verschiebt und bei seiner Verschiebung mit dem ersten Kupplungselements in Eingriff kommt.

4. Antriebseinrichtung nach Anspruch 2 oder 3, wobei die schaltbare Kupplungseinrichtung (24) als formschlüssige Kupplung, insbesondere Klauenkupplung, ausgebildet ist.

5. Antriebseinrichtung nach Anspruch 4, wobei die Kupplungselemente (24a, 24b) der formschlüssigen Kupplung (24) als selbstfindende Elemente ausgebildet sind.

6. Antriebseinrichtung nach Anspruch 2 oder 3, wobei die schaltbare Kupplung als kraftschlüssige Kupplung, insbesondere Reibkupplung, ausgebildet ist.

7. Antriebseinrichtung nach einem der Ansprüche 2 bis 6, wobei der verschieblichen Baugruppe (19) oder dem zweiten Kupplungselement (24b) ein Gegendruckfederelement (20) zugeordnet ist, welches eine dem beim Austreiben der Komponente A aufgebauten Reaktionsdruck entgegen gerichtete Gegendruckkraft zur Festlegung des Wirkpunktes der Kupplungseinrichtung (24) bereitstellt.

8. Antriebseinrichtung nach Anspruch 7, wobei der verschieblichen Baugruppe (19) oder zweiten Kupplungselement (24b) ein Andruckfederelement (21) zur Bereitstellung einer zum Gegendruck beim Austreiben der Komponente A parallel gerichteten Justierungs-Druckkraft zur Feineinstellung des Wirkpunktes der Kupplungseinrichtung (24) zugeordnet ist.

9. Antriebseinrichtung nach Anspruch 7 oder 8, wobei das Gegendruckfederelement (20) und/oder das Andruckfederelement (21) als Schraubenfeder, Tellerfeder oder Blattfeder aus Metall, insbesondere Federstahl, ausgeführt ist.

10. Antriebseinrichtung nach einem der Ansprüche 2 - 9, wobei die erste Austriebsstange (4) als Zahnstange ausgebildet und dieser ein hieran angepasstes Abtriebsrad der Getriebeeinheit (8), insbesondere zwei als Schneckenräder (25c) ausgebildete Abtriebsräder, zugeordnet ist/sind.

11. Antriebseinrichtung nach Anspruch 10, wobei das der Zahnstange (4) zugeordnete Abtriebsrad oder die Abtriebsräder (25c) der Getriebeeinheit (8) derart beweglich gegenüber der Zahnstange gehaltert ist/sind, dass es/sie eine von der Zahnstange mechanisch entkoppelte Position einnehmen kann/können.

12. Antriebseinrichtung nach einem der vorangehenden Ansprüche, wobei die zweite Austriebsstange (5) in einem, bezogen auf die Gebrauchslage, hinteren Teil ihrer Längserstreckung einen spiralverzahnten nicht selbsthemmenden Spindelabschnitt (5b) und am vorderen Ende ein Eingriffselement (5a) zum Eingreifen in den zweiten Austriebskolben (11) aufweist,
wobei die Getriebeeinheit (8) ein Abtriebsrad (29) mit Innen-Spiralverzahnung aufweist, welche an die Spiralverzahnung des Spindelabschnitts angepasst ist.

13. Antriebseinrichtung nach Anspruch 12, wobei im vorderen Bereich der zweiten Austriebsstange (5), außerhalb des spiralverzahnten Spindelabschnitts (5b), ein mitlaufendes Bremselement zur Gewährleistung einer Axialbewegung der Austriebsstange auch im Leerlauf vorgesehen ist.

14. Antriebseinrichtung nach einem der vorangehenden Ansprüche, wobei die Getriebeeinheit (8) einen Drehwellen-Anschlussabschnitt zum Anschluss einer Antriebswelle (10) eines in der Dosier- und Mischvorrichtung (1A) vorgesehenen aktiven Mischers (17) umfasst.

15. Applikationsgerät (1) für Mehrkomponentenstoffe, insbesondere Mehrkomponenten-Klebstoffe, mit einer Antriebseinrichtung (1B) nach einem der vorangehenden Ansprüche, mit einer integrierten elektrischen Antriebsmaschine (9) und Akku-Stromversorgung (15) für diese sowie einer Bedien- und Steuereinheit (13, 14).
